# DEMANDE DE BREVET EUROPEEN

(11) **EP 1 094 377 A1**
(43) Date de publication de la demande: **25.04.2001**
(21) Numéro de dépôt: 99810967.2
(22) Date de dépôt: 22.10.1999
(51) Int. Cl.: G05D 1/00

(54) **Commande à distance d'un véhicule**

(71) Demandeur: Pittet, Bertrand, 1740 Neyruz (CH)
(72) Inventeur: Pittet, Bertrand, 1740 Neyruz (CH)
(74) Mandataire: AMMANN INGENIEURS-CONSEILS EN PROPRIETE INTELLECTUELLE SA BERNE

(57) **Abrégé**

Un véhicule (1) est commandé à distance par un pilote placé dans un poste de pilotage statique (2). Le pilote porte un casque (4) muni d'un écran (5) dans lequel il voit une image transmise à partir d'une caméra (11) montée dans le véhicule (1). Les mouvements et orientations visuelles de la tête du pilote (casque 4), c'est-à-dire de la direction du regard sont transmis à des capteurs, et les signaux de ces capteurs sont transmis immédiatement et sans délai au véhicule (1) pour commander la caméra vidéo (11) dans une orientation correspondante à l'orientation visuelle du pilote, ainsi que les commandes de contrôle du véhicule. Ces commandes de l'orientation de la caméra et des commandes de contrôle du véhicule sans délais permettent une amélioration considérable de la commande à distance. Ceci apporte un grand réalisme au pilotage à tel point que le pilote a réellement l'impression d'être aux commandes du véhicule commandé à distance, et surtout supprime le phénomène du "Malaise du Simulateur" et permet d'augmenter les vitesses d'évolution des véhicules télécommandés.

## Description

La présente invention concerne une commande à distance d'un véhicule par téléprésence selon le préambule de la revendication 1 et un dispositif incorporant cette commande.

Des commandes à distance simples ou élémentaires de ce genre sont connues par exemple de GB-A-2, 212, 465. Dans ces commandes à distance connues la caméra vidéo est montée dans une position fixe sur le véhicule à commander. Les expériences pratiques avec ces commandes à distance connues sont peu satisfaisantes. Si par exemple, on veut faire tourner le véhicule commandé autour d'un obstacle, ce dernier disparaît du champ de vision de l'objectif de la caméra avant même que le pilote n'amorce le virage. Par conséquent, il est impossible de savoir exactement où, quand et comment le virage pour contourner l'obstacle doit être pris.

On connaît aussi un véhicule d'inspection décrit dans le brevet US-5,350,033. Ce véhicule porte une caméra vidéo dont l'orientation peut être commandée à distance de sorte à pouvoir diriger ladite caméra vers des objets à inspecter. Cependant, cette commande ne correspond pas du tout à une commande automatique qui soit fonction de l'orientation visuelle du pilote.

Bien que situé à distance du véhicule commandé, le pilote a l'impression de se trouver à l'intérieur de celui-ci. L'invention est basée sur la constatation qu'il n'est pas suffisant au pilote qui se déplace en voiture automobile ou en avion de ne bouger que ses yeux pour voir tous les détails nécessaires à un pilotage parfait, mais qu'à cette fin, il lui faut faire un mouvement de la tête. C'est le cas, par exemple, lorsque le pilote veut regarder l'image dans le rétroviseur. Par conséquent, la commande à distance selon l'invention doit satisfaire la condition de synchronisation entre les orientations de la caméra et de la tête du pilote, qu'en d'autres termes, l'image transmise étant observée au moyen d'un écran porté par le pilote, l'orientation de la caméra soit continuellement asservie par l'orientation de la tête du pilote situé à distance. L'image transmise au pilote correspond donc à l'image que verrait le pilote s'il se trouvait dans le véhicule.

L'état technique actuel de la présence appliquée à la robotique et au système autonome a été décrit dans une revue scientifique (ELSEVIER, Robotics and Autonomous Systems 26 (1999), pages 117 à 125). L'expérience a confirmé que le pilote tourne automatiquement sa tête dans l'orientation visuelle convenable dans chaque situation particulière, de sorte que la caméra commandée à distance est également tournée dans cette direction. En fait, comme évoqué plus haut, il s'agit d'un principe de synchronisation entre les mouvements naturels de la vue et un système de caméra mobile embarquée à bord d'un véhicule avec un maintien constant de l'image dans le champ visuel du pilote. Par "mouvements naturels de la vue" il est entendu: les mouvements de la tête et/ou des yeux nécessaires à une vision dite normale. Selon ladite revue ELSEVIER, on a relevé, dans les systèmes connus, des délais considérables entre les déplacements de l'orientation visuelle du pilote et les déplacements de la caméra. Ces délais dans la mesure et la transmission des signaux de commande proviennent plus particulièrement de la digitalisation des informations. Les problèmes majeurs qui en découlent dans les systèmes connus sont:
1. le malaise du simulateur, communément appelé Simulator Sickness ou (SS) et
2. la faible vitesse d'évolution possible avec les systèmes de téléprésence actuels (7 à 8 km/h en général avec des vitesses de pointe inférieures à 28 km/h).

Les tentatives entreprises sur les commandes à distance connues pour remédier à ces problèmes majeurs inhérents à la téléprésence sont restées vaines.

Le but de la présente invention est de supprimer le malaise du simulateur (Simulator Sickness - SS) et d'augmenter sensiblement les vitesses d'évolution des véhicules. Ce but est atteint grâce à l'apport d'une amélioration considérable au système actuel de commande à distance d'un véhicule par téléprésence telle que définie dans la partie caractérisante de la revendication 1.

Les résultats obtenus à ce jour, lors de différents essais de la commande selon la présente invention, ont permis de confirmer que les délais de mesure des orientation visuelles et de mouvements de la tête et/ou de transmissions de commandes sont extrêmement faibles, à tel point qu'on peut les considérer comme nuls, puisqu'ils sont de l'ordre de grandeur de la milliseconde. Ces valeurs de délais sont, par rapport à la perception humaine et aux limites mécaniques des véhicules utilisés pour la téléprésence, imperceptibles. Grâce à ces délais très faibles, le phénomène du Simulator Sickness SS disparaît et le véhicule commandé à distance peut évoluer à une vitesse sensiblement supérieure à celle que permettent les commandes à distance de l'art antérieur. De fait, lors des essais précités, les vitesses du véhicule avoisinaient les 100 km/h.

Ainsi qu'il a été dit plus haut, l'inventeur a pu constater, à la suite des essais pratiqués, que le phénomène du SS est lié aux délais dans les commandes. Mais il est apparu difficile de définir une valeur pour ces délais à partir de laquelle le SS se manifeste, car cela dépend de la sensibilité de chaque individu. En revanche, il a pu être établi que la diminution des délais entraîne une diminution du phénomène du SS. Selon l'invention, la valeur de ces délais doit être inférieure à 100 ms, de préférence inférieure à 50 ou même 10 ms. Cela est possible en particulier grâce aux caractéristiques suivantes:
1. Des délais quasi nuls dans la mesure de l'orientation visuelle du pilote et dans la détection de l'orientation de l'axe visuel du pilote.
2. Des délais quasi nuls dans la transmission des commandes contrôlant l'orientation et les mouvements de la caméra embarquée.

On a constaté qu'il est particulièrement important de diminuer le délai entre le début d'un changement de l'orientation visuelle et/ou d'un mouvement de la tête du pilote et le début du changement correspondant du signal de commande agissant sur les servos de la caméra. Mais la vitesse ou l'accélération avec laquelle les mouvements de la caméra sont amorcés importe moins. Ces conditions favorables peuvent être réalisées à l'aide d'une mesure électromécanique et une transmission directe, analogique.

Des essais concluants ont été effectués avec une voiture à l'échelle 1/4 et commandée par un système utilisant une chaîne analogique (télécommande de modéliste) pour diminuer au maximum les temps de mesures de l'orientation de la tête du pilote et de transmissions des commandes nécessaires au véhicule et à la caméra embarquée.

Dans ce qui suit, l'invention sera expliquée plus en détail à l'aide d'un exemple d'exécution préférentiel représenté schématiquement dans le dessin où:

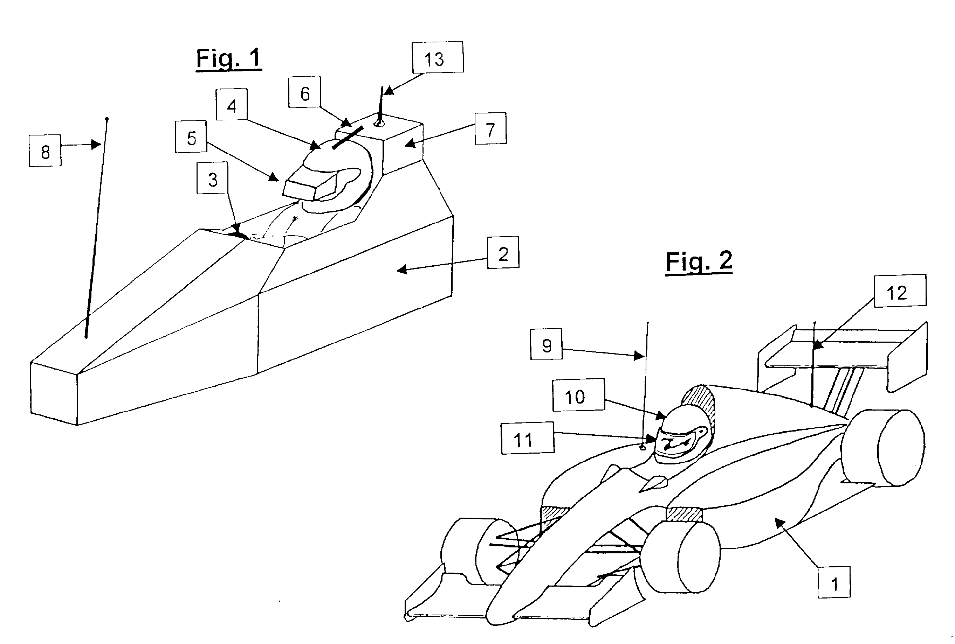

La Fig. 1 représente le poste de pilotage,
la Fig. 2 représente le véhicule commandé et les Fig. 3 et 4 montrent un système de mesure de d'orientation de la tête du pilote.

Dans l'exemple, il s'agit de commander à distance une voiture de course 1. Le pilote se trouve dans un poste de pilotage statique 2 dans lequel tous les éléments de commande, en particulier le volant 3 et les pédales (non-représentées), et/ou toutes autres fonctions sont installées au moins approximativement selon les dimensions et positions correspondant à la réalité. Le pilote porte un casque 4 dans lequel est incorporé un écran 5, et un câble flexible 6 est disposé entre le casque 4 et un système de mesure incorporé dans un boîtier 7 comprenant l'électronique ou la mécanique nécessaire. Le système de mesure permet de détecter l'orientation et les mouvements de la tête du pilote, en l'occurrence l'orientation visuelle, c'est-à-dire du casque 4. Les orientations et les mouvements du casque 4 du pilote sont détectés par des connexions mécaniques reliant ledit casque à des potentiomètres installés dans le boîtier 7. Lesdits potentiomètres constituent des capteurs et correspondent en fait à ceux que l'on trouverait dans une télécommande de modéliste pour piloter à distance des modèles réduits. Ces capteurs analogiques (potentiomètres électriques) sont donc reliés à une télécommande de modéliste, laquelle se charge de traiter ces informations et de les transmettre au système de réception se trouvant dans le véhicule télécommandé 1.

L'émetteur de modéliste transmet les informations nécessaires par une antenne émettrice 8 située sur la station de pilotage statique 2 à une antenne réceptrice 9 de la voiture 1. Il s'agit, d'une part, de la commande à distance proprement dite, c'est-à-dire de la transmission des positions du volant 3, des pédales et autres commandes, et, d'autre part, des informations concernant l'orientation de la caméra ou de la tête du pilote, donc du casque 4. Comme on l'a dit, la voiture 1 comporte tous les éléments de commande nécessaires à son pilotage. Ce système de commande à distance d'une voiture ou de n'importe quel autre véhicule est en soi connu et ne nécessite aucune explication supplémentaire.

Sur la voiture 1 est monté un casque 10 incorporant une caméra 11. Le signal de cette caméra 11 est amplifié et transmis par une antenne 12 à une antenne réceptrice 13 du poste de pilotage 2. L'image ainsi transmise est présentée au pilote, par l'écran 5. L'orientation et les mouvements de la tête du pilote, c'est-à-dire du casque 4, sont continuellement transmis à la voiture 1, et l'orientation de l'ensemble casque 10 - caméra 11 est continuellement adaptée à l'orientation du casque 4 coiffant la tête du pilote.

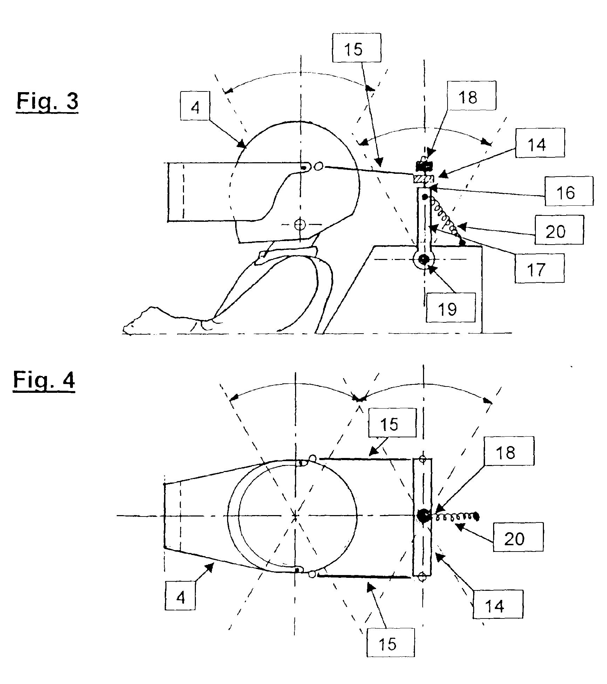

Les Figs. 3 et 4 montrent, en vue latérale et en vue de dessus respectivement, une variante du système de mesure de l'orientation de la tête du pilote. Le casque 4 est relié aux extrémités d'un levier 14 par deux cordes flexibles 15. Le levier 14 est pivotable autour d'un axe 16 fixé dans un levier 17 qui est pivotable autour d'un axe horizontal. Les leviers 14 et 17 agissent sur des potentiomètres 18 et 19 respectivement. Les mouvements de ces leviers sont ainsi transmis à l'un et l'autre de ces potentiomètres. Un ressort 20 agit sur le levier 17 pour maintenir les cordes 15 constamment sous une tension appropriée. Les orientations et les mouvements de la tête du pilote et ainsi du casque 4 autour d'un axe vertical sont transmis par les cordes 15 au levier 14 et au potentiomètre 18. Les mouvements autour d'un axe horizontal sont transmis au levier 17 et au potentiomètre 19.

Dans une variante d'exécution, le levier 17 pourrait être remplacé par un support coulissant agissant sur le potentiomètre 19 par l'intermédiaire d'une connexion mécanique.

La suppression du phénomène du SS et la possibilité de l'augmentation considérable de la vitesse d'évolution du véhicule résultent d'une approche technologique mettant en oeuvre, dans cet exemple préférentiel, un système analogique permettant de faire disparaître les délais dus à la détection de l'orientation de la tête et/ou aux transmissions desdites commandes. C'est ainsi que la présente invention apporte une amélioration considérable de la téléprésence. En fait, les seuls freins aux applications futures utilisant cette invention seront les limites mécaniques et humaines.

Cette commande à distance peut être améliorée et complétée par plusieurs moyens. On peut prévoir un système couleur à haute définition. On peut détecter et transmettre les bruits de la voiture, ce qui permet de faciliter sa commande. On peut même transmettre un son stéréo, prévoir un tableau de bord embarqué, ou ajouter un système de télémétrie et un système de vue à trois dimensions. On peut également détecter et retransmettre les vibrations, les forces et l'assiette (tangage, roulis, profondeur) agissant sur le véhicule, ou encore les sensations dans les commandes et les reproduire dans le poste de pilotage statique 2, par exemple le couple qu'il faut pour tourner le volant 3 ou les forces qu'il faut pour commander les pédales, en particulier la pédale de frein. En plus, on peut prévoir un système radar ou une caméra infrarouge ou thermique.

Les applications de la commande à distance selon l'invention sont vastes. Elles se situent aussi bien dans les domaines des loisirs, professionnel, militaire, utilitaire et du secours.

Au lieu d'un écran porté par le pilote on peut prévoir un écran mobile non porté par celui-ci ou une projection mobile de façon que l'image reste en permanence dans le champ visuel du pilote.

## Revendications

1. Commande à distance d'un appareil de locomotion sur ou sous terre, dans les airs ou dans l'espace, sur ou dans l'eau, notamment d'un véhicule (1), sur lequel est montée une caméra (11) dont le signal d'image est transmis à un poste de pilotage (2) à partir duquel un pilote assure ladite commande à distance à l'aide de l'image transmise par la caméra et observée au moyen d'un dispositif de vision (5) porté ou non par le pilote, cette image restant en permanence dans le champ visuel du pilote, et l'orientation visuelle et/ou l'orientation de la tête du pilote étant continuellement détectée et ladite caméra (11) commandée à distance dans une orientation correspondante à l'orientation visuelle du pilote,
caractérisée en ce que le délai de détection et de transmission entre le début d'un changement de ladite orientation visuelle et le début de changement correspondant du signal de commande de la caméra est réduit à des valeurs inférieures à 100 ms.

2. Commande selon la revendication 1, caractérisée en ce que ledit délai est réduit à des valeurs inférieures à 50 ms, de préférence inférieures à 10 ms.

3. Commande selon la revendication 1 ou 2, caractérisée par les mesures suivantes:
- des délais quasi nuls dans la mesure de l'orientation visuelle du pilote et dans la détection de l'orientation de l'axe visuel du pilote,
- des délais quasi nuls dans la transmission des commandes contrôlant l'orientation et les mouvements de la caméra embarquée.

4. Commande selon l'une des revendications 1 à 3, caractérisée par le fait que les bruits et les sons détectés sur le véhicule (1) sont transmis au poste de pilotage (2) ou au pilote.

5. Commande selon l'une des revendications 1 à 4, caractérisée par le fait que des vibrations et/ou l'assiette du véhicule et/ou des forces agissant sur celui-ci sont détectées et transmises au poste de pilotage (2).

6. Dispositif de commande à distance pour la mise en oeuvre de la commande selon la revendication 1, comprenant un véhicule (1) portant une caméra (11) et un émetteur d'image, une station de commande (2) avec un récepteur et un dispositif de vision (5), et des moyens de commande à distance du véhicule, ledit dispositif de vision (5) étant susceptible d'être porté ou non par un pilote, et que des moyens (4, 6, 7) sont prévus pour détecter l'orientation visuelle du pilote et pour commander à distance l'orientation de ladite caméra (11), caractérisé par une commande analogique de l'orientation de ladite caméra pour réduire le délai de cette commande.

7. Dispositif selon la revendication 6, caractérisé par un système de mesure électromécanique de l'orientation de la tête et/ou de l'orientation visuelle du pilote, ce système comportant de préférence des potentiomètres.

8. Dispositif, de préférence selon la revendication 7, caractérisé par une casque (4) susceptible d'être porté par le pilote, ce casque étant relié à un levier par deux cordes ou tiges (15) pour transmettre les mouvements du casque audit levier (14), ce levier étant monté de façon articulée sur un support coulissant ou sur un levier pivotant, ledit ou lesdits leviers ou ledit support agissant directement ou indirectement sur des potentiomètres du circuit de commande.

9. Dispositif selon l'une des revendications 6 à 8, caractérisé par un système de transmission au poste de pilotage des bruits et des sons du véhicule.

10. Dispositif selon l'une des revendications 6 à 9, caractérisé par un système de transmission des vibrations et/ou de l'assiette du véhicule et/ou les forces agissant sur le véhicule et de simulation de ces vibrations, de ladite assiette et/ou des ces forces dans le poste de pilotage (2) .

11. Dispositif selon l'une des revendications 6 à 10, caractérisé par un tableau de bord embarqué comprenant les instruments du véhicule.

12. Dispositif selon l'une des revendications 6 à 11, caractérisé par un système de retransmission au poste de pilotage (2) des sensations perçues dans les commandes du véhicule (1).

13. Dispositif selon l'une des revendications 6 à 12, caractérisé en ce qu'un système radar est monté sur le véhicule.

14. Dispositif selon l'une des revendications 6 à 13, caractérisé par une caméra infrarouge ou thermique monté sur le véhicule.

15. Dispositif selon l'une des revendications 6 à 14, caractérisé par un système de vue permettant une vision en 3D (trois dimensions).

16. Dispositif selon l'une des revendications 6 à 15, caractérisé par un système de repérage du véhicule du genre GPS (Global Position System).

17. Dispositif selon l'une des revendications 6 à 16, caractérisé par un système embarqué de télémétrie.
